# EUROPEAN PATENT SPECIFICATION

(11) **EP 0 907 395 B1**
(45) Date of publication and mention of the grant of the patent: **07.11.2001**
(21) Application number: 97927343.0
(22) Date of filing: 04.06.1997
(51) Int. Cl.: B01D 15/08, A61K 49/04

(54) **REVERSED PHASE CHROMATOGRAPHIC PROCESS**
UMKEHRPHASENCHROMATOGRAPHIEVERFAHREN
PROCEDE DE CHROMATOGRAPHIE EN PHASE INVERSEE

(30) Priority: 05.06.1996 IE 960412
(43) Date of publication of application: 14.04.1999
(73) Proprietor: Mallinckrodt Medical Imaging-Ireland, Dublin 2 (IE)
(72) Inventor: COLLINS, Elizabeth, Dublin 18 (IE); MULDOON, Stephen, Dunboyne, County Meath (IE); O'CALLAGHAN, Brendan, Rathoath, County Meath (IE); CAROLAN, Dominic, Malahide, County Dublin (IE)
(74) Representative: O'Brien, John Augustine
(86) International application number: IE9700040
(87) International publication number: WO9746299

(56) References cited:
- WO-A-91/12868
- WO-A-97/20609
- WO-A-97/20610

## Description

### Background of the Invention

This invention relates to a process for the reversed phase chromatographic decolorisation, separation and purification of water-soluble nonionic contrast media compounds from solutions containing nonionic compound impurities.

A process of this type is described in WO 91/12868A. While this process is very successful for maximum manufacturing efficiency, there is a need to optimise the yield of the nonionic contrast media compound.

### Summary of the Invention

The object of the invention is to provide an improved process for the decolorization, reversed phase chromatographic separation and purification of water-soluble, nonionic contrast media compounds in which the yield of the desired contrast media compound is maximised.

According to the invention there is provided a process for the reversed phase chromatographic decolorisation, separation and purification of water-soluble nonionic contrast media compounds from solutions containing nonionic compound impurities comprising the steps of:-
passing a solution containing a water-soluble, nonionic contrast media compound and nonionic compounds as impurities through a chromatographic packing material in a primary chromatographic column;
eluting the primary column to produce primary eluate containing substantially pure, water-soluble, nonionic contrast media compound;
passing a solvent through the primary column to wash an initial column hold-up from the column, the hold-up being substantially aqueous based and containing nonionic contrast media compound;
recovering the nonionic contrast media compound from the initial column hold-up by passing the initial column hold-up through a chromatographic packing material in a recovery chromatographic column to form a substantially aqueous eluate leaving the nonionic contrast media compound bound to the recovery column, and passing a solvent through the recovery column to wash the chromatographic packing material and to form an initial column hold-up eluate comprising solvent and non-ionic contrast media compound;
passing solvent through the recovery column to wash the chromatographic packing material and to form a mixture from the recovery column comprising solvent, nonionic contrast media compound and, as impurities, nonionic compounds;
adding the purified initial column hold up eluate to the mixture prior to removal of the solvent;
removing the solvent from the mixture including the purified initial column hold-up eluate, to leave an aqueous solution containing contrast media compound and impurities;
concentrating the aqueous solution to increase the concentration of the nonionic contrast media compound;
removing at least some of the nonionic compound impurities from the concentrated aqueous solution; and
recovering the nonionic contrast media compound from the concentrated aqueous solution.

In a preferred embodiment of the invention, the solvent which has passed through said column is removed by:-
distilling said mixture to provide a distillate of substantially pure solvent and a bottoms product comprising the aqueous solution containing the nonionic contrast media compound and nonionic compounds as impurities.
In one embodiment of the invention, the nonionic contrast media compound is recovered from the bottoms product by:-
concentrating the bottoms product; and
passing the concentrated bottoms product through a chromatographic column to form a tertiary eluate containing nonionic contrast media compound.

Preferably, the process includes the step of crystallising the impurities in the concentrated bottoms product and filtering said concentrated bottoms product to remove the crystallised impurities.

Typically, said tertiary eluate is concentrated by evaporation to form a concentrated tertiary eluate. Preferably, the tertiary eluate is concentrated under vacuum in order to minimise any potential for thermal degradation.

In a preferred embodiment of the invention, said concentrated tertiary eluate is mixed with primary and/or secondary eluate from the main process and the combined eluate is purified and dried to produce a nonionic contrast media compound.

Preferably, the solvent is a lower alkanol, especially methanol.

The novel process of the present invention is applicable to the general decolorization and separation of nonionic compound impurities from water-soluble, nonionic contrast media compounds, nonionic nuclear diagnostic imaging compounds or alternatively, MRI agents. The nonionic contrast media compounds include x-ray contrast media compounds such as N,N'-bis(2,3-dihydroxypropyl)-5-[N-(2-hydroxyethyl)glycolamido]-2,4,6-triiodo-isophthalamide(ioversol), N,N'-bis(2,3-dihydroxypropyl)-5-[N-(2,3-dihydroxypropyl)acetamido]-2,4,6-triiodoisophthalamide(iohexol), N,N'-bis(1,3-dihydroxypropyl)-5-lactylamido-2,4,6-triiodoisophthalamide(iopamidol), 2[3-acetamido-2,4,6-triiodo-5- (N-methylacetamido) benzamido]-2-deoxy-D-glucose(metrazamide), N,N'-bis(2,3-hydroxypropyl)-2,4,6-triiodo-5-(2-keto-L-gulonamido) isophthalimide(iogulamide), 5,5'-[malonylbis[(2-hydroxy-ethyl)imino]]bis[N,N'-bis[2-hydroxy-1-(hydroxymethylethyl)] -2,4,6-triiodoisophthalamide(iodecimol)5,5'-[(2-hydroxytrimethylene)bis(acetylimino)]bis[N,N'-bis(2,3-dihydroxypropyl)-2,4,6-triiodoisophthalamide(iodixanol), 3-[N-(2-hydroxyethyl)acetamido]-2,4,6-triiodo-5-(methylcarbamoyl)-D-glucoanilide(ioglucol), N,N'-bis(2,3-dihydroxypropyl)-2,4,6-triiodo-5-(N-methylglycolamido) isophthalamide(iomeprol), N,N'-bis(2,3-dihydroxypropyl)-5-[N-(2-hydroxy-3-methoxypropyl)acetamido]-2,4,6-triiodoisophthalamide(iopentol), N,N'-bis(2,3-dihydroxypropyl)2,4,6-triiodo-5-(2-methoxyacetamido)-N-methylisophthal-amide(iopromide), 3,5-diacetamido-2,4,6-triiodo-N-methyl-N[[methyl(D-gluco2,3,4-5,6-pentahydroxyhexyl)carbamoyl]methyl]benzamide(iosarcol), N,N,N',N',N",N"-hexakis(2-hydroxyethyl)-2,4,6-triiodo-1,3,5-benzenetricarboxamide(iosimide, 5,5'[thiobis(ethylenecarbonylimino)}bis[N,N-bis(2,3-dihydroxypropyl)-2,4,6-triiodo-N,N'-dimethylisophthalamide (iotasul), and 5,5'-[malonylbis(methylimino)]bis[N,N'-bis[2,3-dihydroxy-1(hydroxy-methyl)propyl]-2,4,6-triiodoisophthalamide (iotrolan).

As used herein, the term "nonionic contrast media compounds" includes, and the present invention is applicable to, nuclear agents, nonionic magnetic resonance imaging (MRI) agent ligands and neutral (or nonionic) metal complexes of their ligands with suitable metals from the first, second, or third row transition elements or the lanthanide or actinide series. Typical ligands include N,N"-bis[N-(2,3-dihydroxypropyl)carbamoylmethyl]-diethylenetriamine-N,N',N"-triacetic acid, N,N'-bis[N-(2,3-dihydroxypropyl) carbamoylmethyl]ethylene-diamine-N,N'-diacetic acid, N,N' "-bis[N-(2-hydroxyethyl)-carbamoylmethyl] triethylenetetraamine-N,N',N",N' "-tetraacetic acid, N,N"-bis[N-(1-hydroxymethyl-2,3-dihydroxypropyl) carbamoylmethyl]diethylenetriamine-N,N',N"-triaacetic acid and N,N'-bis[N-(2-hydroxyethyl)carbamoylmethyl] ethylenediamine-N,N'-diacetic acid. Examples of various other complexes, nonionic contrast media compounds and MRI agents which may be purified through the process of the invention are known to those skilled in the art.

In one particular embodiment of the invention, the contrast media compound is the nonionic X-ray contrast media compound N,N'-bis(2,3-dihydroxypropyl)-5-[N-(2-hydroxyethyl)glycolamido]-2,4,6-triiodoisophthalamide (Ioversol) described in US 4,396,598.

### Description of the Drawings

The invention will be more clearly understood from the following description thereof, given by way of example only, in which:-
Fig. 1 is a schematic flow diagram of an improved recovery process according to one aspect of the invention;
Fig. 2 is a flowchart of some details of the process of Fig. 1; and
Fig. 3 is a schematic flow diagram of an improved process according to another aspect of the invention.

### Description of Preferred Embodiment

It has been found that the process described in WO 91/12868A may be further improved by extracting the relatively small but significant amount of nonionic contrast medium compound remaining on the column packing and recovering the nonionic contrast medium compound.

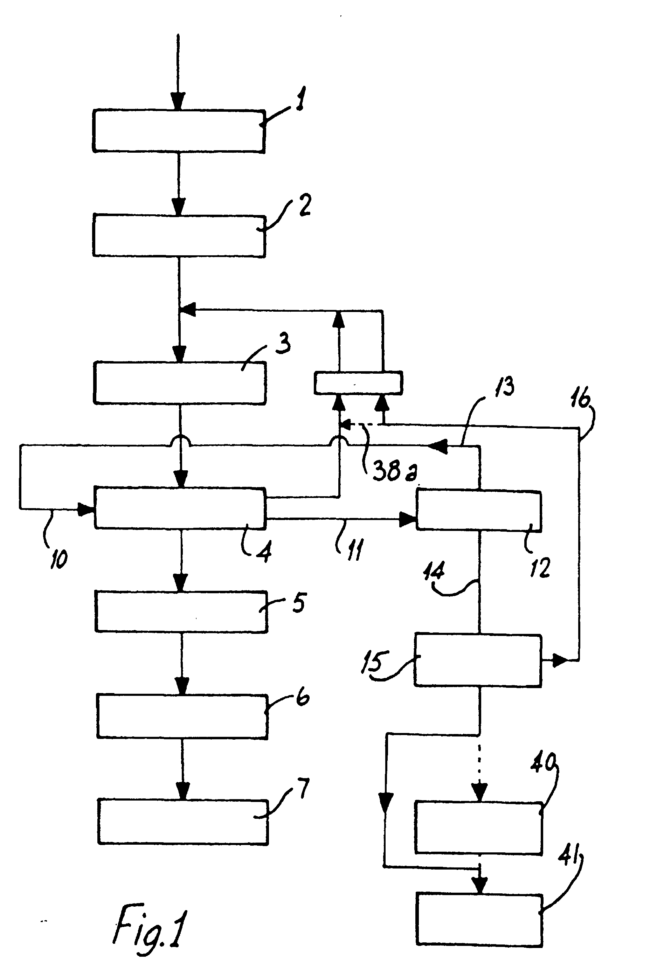

In the improved process of the invention illustrated in Fig. 1, the first step is decolorisation 1 followed by deionisation 2 and evaporation 3. After evaporation, the nonionic contrast medium compound is purified in step 4, concentrated by evaporation in step 5 and dried in step 6 to provide a finished nonionic contrast medium product 7.

In the purification process, methanol delivered along line 10 is used to wash the chromatographic purification columns and the mixture containing methanol, nonionic contrast media compound from the column packing is delivered along a line 11 to a solvent recovery still 12. The substantially pure methanol distillate from the recovery still 12 is recycled along line 13 to the main methanol intake 10 and bottoms product 14 from the methanol recovery still 12 is delivered to a nonionic contrast medium recovery process 15 which is described in more detail below. Waste material from the recovery process may be deiodinated at 40 prior to waste treatment 41. Nonionic contrast medium recovered in the recovery process 15 is recycled along line 16 for combining with a secondary eluate stream either after concentration or before concentration. The combined concentrated secondary and tertiary eluates are then combined with crude material either after deionisation, as illustrated, or before deionisation.

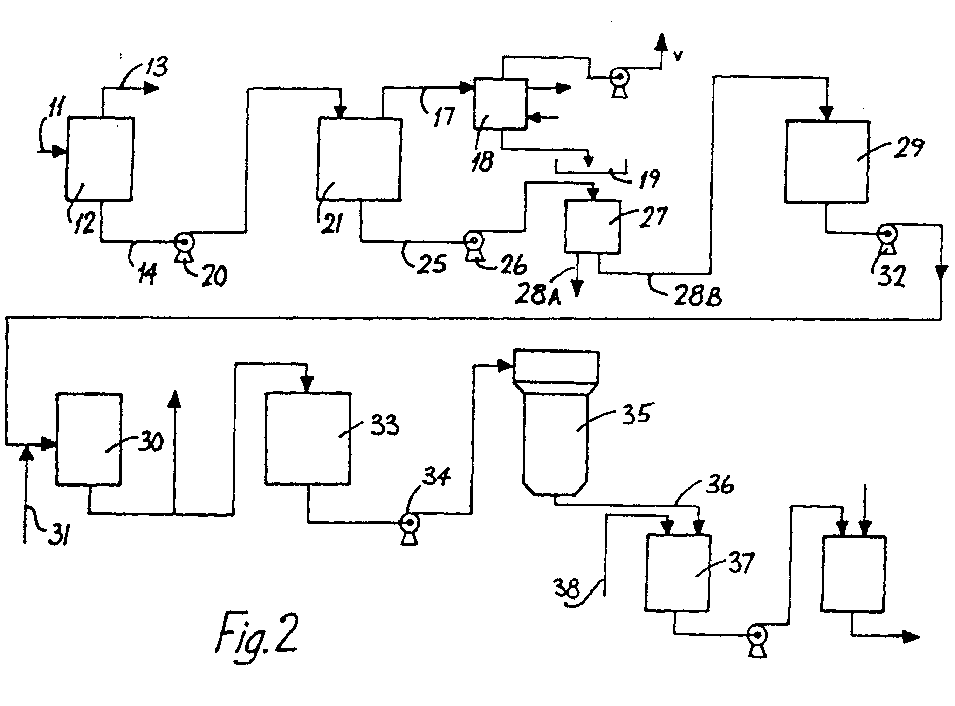

The bottoms product 14 is an aqueous solution containing the nonionic contrast media compound and nonionic compounds as impurities. In more detail, and referring to Fig. 2, the bottoms product 14 from the methanol still 12 is pumped by a pump 20 to a vessel 21 in which the bottoms are concentrated and impurities may be crystallised. Tops product 17 from the still 12 is condensed in a condenser 18, the condensate being collected in a receiver 19 and gases being discharged to vent V.

A stream 25 containing (if present) concentrated bottoms product and crystallised impurities is then pumped to a filter 27 in which the solids impurities are filtered out in the form of a filter cake 28A, with the filtrate 28B containing the nonionic contrast medium passing into a holding tank 29.

From the holding tank 29, the filtrate is delivered by a pump 32 for purification by reverse phase chromatography in a chromatographic column 30 using the techniques described in WO 91/12868A.

Tertiary eluent from the column 30 is delivered into a holding tank 33 and then pumped by a pump 34 to an evaporator 35 in which the tertiary eluent is concentrated under vacuum to form a concentrate 36 which may be combined in a tank 37 with primary and secondary eluent 38 from the primary process described above. Alternatively, as illustrated by the interrupted line 38a, the tertiary eluate may be combined with the secondary eluent prior to evaporation 35. The combined secondary and tertiary eluents may then be combined with crude Ioversol solution either after deionisation, as shown, or before deionisation.

We have found that using the improved process of the invention has increased the yield of nonionic contrast medium by up to 2.5% per batch resulting in very significant improvements in productivity while minimising waste.

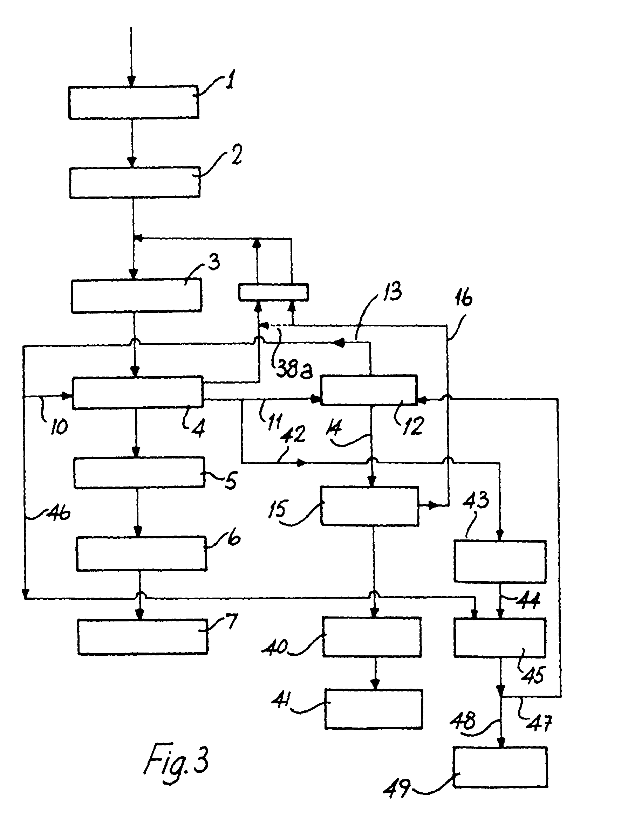

Referring to Fig. 3, there is illustrated another improved process according to the invention in which like parts to those identified above are assigned the same reference numerals.

The existing purification columns are regenerated following each run by washing with methanol. The spent methanol is delivered, along line 11, to a solvent recovery still 12. The initial column hold-up from the methanol washing step, which is substantially aqueous based and contains nonionic contrast media is delivered along line 42 to a hold-up recovery collection vessel 43.

The hold-up fraction from a number of purification runs is combined in the hold-up recovery collection vessel 43 and then delivered along line 44 to a reversed phase chromatographic column 45 for recovery of the nonionic contrast media compound. The hold-up fractions(s) 44 are passed through the chromatographic column, where the water fraction passes directly through the column and is diverted along line 48 to a waste water treatment system 49. The nonionic contrast media compound present in the hold-up fractions (stream 44) are adsorbed onto the column packing as the stream is passed through the chromatographic purification column 45.

The non ionic contrast media compound adsorbed onto the chromatographic purification column 45 are recovered by washing the column with methanol, delivered along line 46 from the main purification methanol supply system, 10. As the methanol passes through the chromatographic purification column 45 it washes the nonionic contrast media compound from the column packing. This stream is delivered along line 47 to the solvent recovery still 12.

The substantially pure Methanol distillate from the recovery still 12 is recycled along line 13 to the main Methanol intake 10 and bottoms product 14 from the methanol recovery still 12, now containing a portion of nonionic contrast media compound from both the primary purification process and the hold-up recovery process, is delivered to the nonionic contrast media recovery process 15, for recovery of the nonionic contrast media compound using the techniques described above.

This process has many advantages. Using the process, an increased yield of up to 4% may be achieved, of which 1.4% is due to the hold-up recovery process. In addition, the utilisation of chromatographic columns is optimised by separation and purification of nonionic contrast media compound from a waste hold-up fraction.

### EXAMPLE 1

The process outlined in Example 3 of WO 91/12868 was carried out. When the last purification column regeneration operation from the process described in WO 91/12868 was completed, the methanol recovery operation was continued until the methanol levels in the still bottoms were <3% w/v. The still bottoms solution was then tested for density, transferred to a 630 L glass lined reactor, agitated and the temperature controlled at 40°C.

The reactor was then placed under a vacuum of ca. 0.15 barA and the temperature of the reactor contents were then brought up slowly to the solution boiling point of ca. 55-70°C. As water was evaporated from the solution, the solubility of impurity A decreased resulting in precipitation or crystallisation of the impurity. This concentration/crystallisation step was continued until the final required concentration of ca. 50-70% w/w iodinated compounds was achieved, as estimated from the solution density.

Once the correct concentration was achieved, the reactor contents were cooled until the temperature was <25°C, at which point the vacuum was removed.

The contents of the reactor were then agitated for 1 hour to enhance the crystallisation of impurity A. After this holding period the contents were pumped through a horizontal plate filter and the filtrate was collected in a hold tank. Impurity A, crystallised in the glass lined reactor, was removed on the filter plates resulting in a clear filtrate, with a much reduced impurity level passing to the next step. The filter cake was washed and the wash recycled to the glass lined concentration/crystallisation vessel for addition to the next batch. The filter was then blown dry with compressed air and the filter split to remove the filter cake. The plates were then cleaned and the filter unit made ready for the next batch.

The filtrate from the above step was then purified by reverse phase chromatographic separation in a stainless steel column (610mm internal diameter x 996mm length) packed with approximately 155kgs of dry silanized chromatographic packing material, consisting of octadecylsilane bonded to solid silica particles ('ODS-Si'). The column bed was prepared by filling the column initially with ca. 150kgs of dry packing, while vibrating the column to ensure a uniform column bed. Approximately 790 L of Methanol were then pumped through the column, followed by ca. 833 L of Process Water. This process forces air from the packing material, compacting it to leave an empty space at the top of the column, which was then filled with additional fresh resin. The flushing procedure was then repeated and the column 'topped off' again with this process repeated until there was no further compression of the packing material. The column, which will be termed the 3rd crop recovery column, holds a total of ca. 155 kgs of packing material when completely packed.

The filtrate from the earlier filtration step was sampled for density and a calculation then performed using the volume of filtrate (based on tank level), the solution density and the purification loading ratio to determine the optimum number of runs required to effect separation of nonionic impurities A, B, C and D in the feed stream.

The required volume of solution, containing approximately 12-15 kgs of Ioversol and containing nonionic impurities A, B, C & D was pumped through a 0.2 micron filter onto the chromatographic column. The loading ratio of packaging material/total wt. nonionic compounds was between 5:1 and 7:1. Process water was then pumped through the column to elute the product.

The first ca. 300 lts of effluent, or eluate, from the chromatographic column was directed to drain. On detection of product (density at the outlet of the column exceeds 1.000 for > 3 seconds or a maximum of 300 L eluate is reached) the eluate was then redirected to a holding tank for collection. This fraction, which will be termed the Ioversol 3rd Crop, to differentiate it from the 1st and 2nd cuts already generated in the standard process described in WO91/12868 contains ca. 85-95% of the purified Ioversol.

The chromatographic column was then flushed with a mixture of methyl alcohol and water which contained at least 50% methyl alcohol to remove non ionic compound impurities from the column and regenerate the column packing for reuse. The column was then reequilibrated with process water before reuse in purifying subsequent batches containing Ioversol and nonionic impurities A, B, C and D.

The 3rd crop chromatography fraction containing purified Ioversol was then concentrated on a single pass through a wiped film evaporator under a vacuum of ca. 0.28 barA to obtain a solution of ca. 3-6% concentration. This concentrated 3rd crop solution was then mixed with normal concentrated second cut material, with the composite material sampled to evaluate quality. On satisfactory review of the levels of nonionic impurities A, B, C and D in the 3rd crop and composite 3rd crop/2nd cut materials described above, the composite solution may then be recycled to a subsequent batch of crude Ioversol solution, either before or after deionisation, for purification by reverse phase chromatographic separation as described in WO 91/12868.

This process illustrates that the combined 3rd crop and second fraction materials may be further reprocessed by recycling into the original column feed provided sufficient overall quality is maintained.

### EXAMPLE 2

Example 1 was repeated except that in this case the first 227 L of eluent from the column purification regeneration process, or hold-up stream, was re-directed from a high strength waste tank to a receiver, now known as the hold-up recovery receiver - a 2000 L, stainless steel, agitated, jacketed vessel.

When at least 5 regeneration operations were complete, the solution in the hold-up recovery receiver, containing ca 0.35-0.5% w/v Ioversol, was pumped into the suction side of the 3rd crop recovery column feed pump. This high pressure pump was then started and the solution pumped through the 3rd crop recovery column at ca 16-22.7 L.min⁻¹.
The substantially aqueous eluent from the column was directed to drain. If the number of purification runs was scheduled at 9 or less, then only one hold-up recovery operation was required. In this case, the operation was started when the second last regeneration operation began.

When the hold-up receiver was empty, both the transfer and high pressure pumps were stopped.

The column was then regenerated in an identical fashion to the regeneration of the main purification columns, as described in WO 91/12868. In this case, the solvent eluting from the 3rd crop column instead of being directed to the waste solvent tank was directed to the solvent recovery distillation column. This solvent stream was mixed with solvent from the regeneration of the main columns, from the same batch, thus maintaining batch integrity.

When the subsequent regeneration operations of the main columns were complete, and the hold-up solution gathered in the hold-up receiver again, the hold-up recovery operation was repeated. As stated, the product containing solvent recovered from this stream was mixed with solvent from the regeneration of the main columns and the total product recovered through the 3rd crop recovery operation.

The 3rd crop recovery operation was carried out as described in example 1, except the loading ratio was reduced from ca 7:1 to between 5:1 to 6:1. This loading ratio reduction was enabled by the improvement in impurity profile brought about by the recycle of the hold-up stream, the impurity profile also allowed for use of similar 3rd crop first cut volumes, and hence comparable percentage yields between the 3rd crop streams with and without product from the hold-up stream.

The process of the invention is applicable not only to industrial scale production of Ioversol but also to the general decolorisation and separation of nonionic compound impurities from water-soluble, nonionic contrast media compounds in general, or MRI agents. Examples of such compounds and agents are given in WO 91/12868A, including identification of the nonionic compound impurities A, B, C, and D.

The process of the invention is also applicable to all water soluble diagnostic agents purified by reverse phase HPLC.

The invention is not limited to the embodiments hereinbefore described which may be varied in detail.

## Claims

1. A process for the reversed phase chromatographic decolorisation, separation and purification of water-soluble nonionic contrast media compounds from solutions containing nonionic compound impurities comprising the steps of: -
passing a solvent containing a water-soluble nonionic contrast media compound and nonionic compounds as impurities through a chromatographic packing material in a primary chromatographic column;
eluting the primary column to produce primary eluate containing substantially pure, water-soluble, nonionic contrast media compound;
passing a solvent through the primary column to wash an initial column hold-up from the column, the hold-up being substantially aqueous based and containing nonionic contrast media compound;
recovering a nonionic contrast media compound from the initial column hold-up by passing the initial column hold-up through a chromatographic packing material in a recovery chromatographic column to form a substantially aqueous eluate leaving the nonionic contrast media compound bound to the recovery column and passing a solvent through the recovery column to wash the chromatographic packing material and to form a purified initial column hold up eluate comprising solvent and nonionic contrast media compound;
passing solvent through the recovery column to wash the chromatographic packing material and to form a mixture from the recovery column comprising solvent, nonionic contrast media compound, and, as impurities, nonionic compounds;
adding the purified initial column hold up eluate to the mixture from the recovery column;
removing the solvent from the mixture including the purified initial column hold up eluate to leave an aqueous solution containing contrast media compound and impurities;
concentrating the aqueous solution to increase the concentration of the nonionic contrast media compound;
removing at least some of the nonionic compound impurities from the concentrated aqueous solution; and
recovering the nonionic contrast media compound from the concentrated aqueous solution.

2. A process as claimed in claim 1 wherein the solvent which has passed through the primary column is removed by:-
distilling said mixture, including the purified initial column hold up eluate, to provide a distillate of substantially pure solvent and a bottoms product comprising the aqueous solution containing the nonionic contrast media compound and nonionic compounds as impurities.

3. A process as claimed in claim 2 wherein the nonionic contrast media compound is recovered from the bottoms product by: -
concentrating the bottoms product; and
passing the concentrated bottoms product through a chromatographic column to form a tertiary eluate containing nonionic contrast media compound.

4. A process as claimed in claim 3 including the step of crystallising the impurities in the concentrated bottoms product and filtering said concentrated bottoms product to remove the crystallised impurities.

5. A process as claimed in claim 3 or 4 wherein said tertiary eluate is concentrated by evaporation to form a concentrated tertiary eluate.

6. A process as claimed in claim 5 wherein said tertiary eluate is concentrated under vacuum.

7. A process as claimed in claim 5 or 6 wherein said concentrated eluate is mixed with primary and/or secondary eluate and the combined eluate is purified and dried to produce a nonionic contrast media compound.

8. A process as claimed in any preceding claim wherein the solvent is a lower alkanol.

9. A process as claimed in claim 8 wherein the solvent is methanol.

10. A process as claimed in any preceding claim wherein the contrast media compound is the nonionic x-ray contrast media compound N,N'-bis(2,3-dihydroxypropyl)-5- [N-(2-hydroxyethyl)glycolamido] -2,4,6-triiodoisophthalamide.

## Patentansprüche

1. Verfahren zur Umkehrphasenchromatographie-Entfärbung, Abtrennung und Reinigung von wasserlöslichen nichtionischen Kontrastmittelverbindungen aus Lösungen, die Verunreinigungen von nichtionischen Verbindungen enthalten, das die Schritte umfaßt:-
Leiten eines Lösungsmittels, das eine wasserlösliche, nichtionische Kontrastmittelverbindung und nichtionische Verbindungen als Verunreinigungen enthält, durch ein chromatographisches Packmaterial in einer ersten Chromatographiesäule;
Eluieren der ersten Säule, um ein erstes Eluat, das im wesentlichen reine, wasserlösliche, nichtionische Kontrastmittelverbindung enthält, zu erzeugen,
Leiten von Lösungsmittel durch die erste Säule, um einen anfänglichen Säulen-Rückhalt von der Säule zu waschen, wobei der Rückhalt im wesentlichen wässrig ist und nichtionische Kontrastmittelverbindung enthält;
Rückgewinnen einer nichtionischen Kontrastmittelverbindung von dem anfänglichen Säulen-Rückhalt, indem man den anfänglichen Säulen-Rückhalt durch ein chromatographisches Packmaterial in einer Rückgewinnungschromatographiesäule leitet, um ein im wesentliches wässriges Eluat zu bilden, wobei man die nichtionische Kontrastmittelverbindung an der Rückgewinnungssäule gebunden läßt, und Leiten eines Lösungsmittels durch die Rückgewinnungssäule, um das chromatographische Packmaterial zu waschen und um ein gereinigtes anfängliches Säulen-Rückhalt-Eluat, das Lösungsmittel und nichtionische Kontrastmittelverbindung umfaßt, zu bilden;
Leiten von Lösungsmittel durch die Rückgewinnungssäule, um das chromatographische Packmaterial zu waschen und um eine Mischung von der Rückgewinnungssäule zu bilden, umfassend Lösungsmittel, nichtionische Kontrastmittelverbindung und als Verunreinigungen nichtionische Verbindungen;
Zugeben des gereinigten anfänglichen Säulen-Rückhalt-Eluats zu der Mischung von der Rückgewinnungssäule;
Entfernen des Lösungsmittels aus der Mischung, die den anfänglichen Säulen-Rückhalt-Eluat einschließt, um eine wässrige Lösung, die Kontrastmittelverbindung und Verunreinigungen enthält, übrig zu lassen;
Konzentrieren der wässrigen Lösung, um die Konzentration der nichtionischen Kontrastmittelverbindung zu erhöhen;
Entfernen wenigstens eines Teils der nichtionischen Verbindungsverunreinigungen aus der konzentrierten wässrigen Lösung; und
Rückgewinnen der nichtionischen Kontrastmittelverbindung aus der konzentrierten wässrigen Lösung.

2. Verfahren gemäß Anspruch 1, wobei das Lösungsmittel, welches durch die erste Säule geleitet wurde, entfernt wird durch:-
Destillieren der Mischung, einschließlich des gereinigten anfänglichen Säulen-Rückhalt-Eluats, um ein Destillat eines im wesentlichen reinen Lösungsmittels und ein Bodenprodukt, das die wässrige Lösung, die die nichtionische Kontrastmittelverbindung und nichtionische Verbindungen als Verunreinigungen enthält, umfaßt, bereitzustellen.

3. Verfahren gemäß Anspruch 2, wobei die nichtionische Kontrastmittelverbindung von dem Bodenprodukt rückgewonnen wird durch:-
Konzentrieren des Bodenproduktes; und
Leiten des konzentrierten Bodenproduktes durch eine Chromatographiesäule, um ein drittes Eluat, das nichtionische Kontrastmittelverbindung enthält, zu bilden.

4. Verfahren gemäß Anspruch 3, das den Schritt des Kristallisierens der Verunreinigungen in dem konzentrierten Bodenprodukt und Filtrieren des konzentrierten Bodenproduktes, um die kristallisierten Verunreinigungen zu entfernen, einschließt.

5. Verfahren gemäß Anspruch 3 oder 4, wobei das dritte Eluat durch Verflüchtigung konzentriert wird, um ein konzentriertes drittes Eluat zu bilden.

6. Verfahren gemäß Anspruch 5, wobei das dritte Eluat unter Vakuum konzentriert wird.

7. Verfahren gemäß Anspruch 5 oder 6, wobei das konzentrierte Eluat mit dem ersten und/oder zweiten Eluat gemischt wird und das vereinigte Eluat gereinigt und getrocknet wird, um eine nichtionische Kontrastmittelverbindung herzustellen.

8. Verfahren nach einem der vorhergehenden Ansprüche, wobei das Lösungsmittel niederes Alkanol ist.

9. Verfahren gemäß Anspruch 8, wobei das Lösungsmittel Methanol ist.

10. Verfahren nach einem der vorhergehenden Ansprüche, wobei die Kontrastmittelverbindung die nichtionische Röntgen-Kontrastmittelverbindung N,N'-Bis(2,3-dihydroxypropyl)-5-[N-(2-hydroxyethyl)glycolamido]-2,4,6-trijodisophthalamid ist.

## Revendications

1. Procédé pour la décoloration, la séparation et la purification de composés formant milieu de contraste non ioniques hydrosolubles par chromatographie en phase inverse à partir de solutions contenant à titre d'impuretés des composés non ioniques, comprenant les étapes consistant à :
- faire passer un solvant contenant un composé non ionique formant milieu de contraste hydrosoluble et, en tant qu'impuretés, des composés non ioniques à travers un matériau de garnissage pour chromatographie dans une colonne primaire de chromatographie ;
- éluer la colonne primaire de façon à obtenir un premier éluat contenant le composé hydrosoluble non ionique formant milieu de contraste pratiquement pur ;
- faire passer un solvant à travers la colonne primaire de façon à laver un premier rétentat de colonne hors de la colonne, le rétentat étant pratiquement aqueux et contenant un composé non ionique formant milieu de contraste ;
- récupérer un composé non ionique formant milieu de contraste du rétentat de colonne initial en faisant passer le rétentat de colonne initial à travers un matériau de garnissage pour chromatographie dans une colonne chromatographique de récupération de façon à obtenir un éluat pratiquement aqueux en laissant le composé non ionique formant milieu de contraste attaché à la colonne de récupération et en faisant passer un solvant à travers la colonne de récupération de façon à laver le matériau de garnissage pour chromatographie pour former un éluat, issu du rétentat initial de colonne, purifié, comprenant le solvant et le composé non ionique formant milieu de contraste;
- faire passer un solvant à travers la colonne de récupération de façon à laver le matériau de garnissage pour chromatographie et à produire un mélange issu de la colonne de récupération comprenant le solvant, le composé non ionique formant milieu de contraste et, en tant qu'impuretés, les composés non ioniques ;
- ajouter au mélange issu de la colonne de récupération l'éluat issu du rétentat initial de colonne, purifié ;
- éliminer le solvant du mélange incluant l'éluat issu du rétentat initial de colonne, purifié, de façon à obtenir une solution aqueuse contenant le composé formant milieu de contraste et des impuretés ;
- concentrer la solution aqueuse de façon à augmenter la concentration en composé non ionique formant milieu de contraste ;
- éliminer au moins un peu des impuretés de type composé non ionique de la solution concentrée aqueuse ; et
- récupérer le composé non ionique formant milieu de contraste de la solution aqueuse concentrée.

2. Procédé selon la revendication 1, dans lequel le solvant que l'on a fait passer à travers la colonne primaire est éliminé par :
distillation dudit mélange, incluant l'éluat issu du rétentat initial de colonne, purifié, de façon à fournir un distillat composé du solvant pratiquement pur et un produit de queue comprenant la solution aqueuse contenant le composé non ionique formant milieu de contraste et les composés non ioniques, en tant qu'impuretés.

3. Procédé selon la revendication 2, dans lequel le composé non ionique formant milieu de contraste est récupéré du produit de queue par :
- concentration du produit de queue ; et
- passage du produit de queue concentré à travers une colonne chromatographique de façon à former un éluat tertiaire contenant le composé non ionique formant milieu de contraste.

4. Procédé selon la revendication 3 incluant l'étape de cristallisation des impuretés dans le produit de queue concentré et filtration dudit produit de queue concentré de façon à éliminer les impuretés cristallisées.

5. Procédé selon la revendication 3 ou la revendication 4, dans lequel ledit éluat tertiaire est concentré par évaporation de façon à former un éluat tertiaire concentré.

6. Procédé selon la revendication 5, dans lequel ledit éluat tertiaire est concentré sous vide.

7. Procédé selon la revendication 5 ou la revendication 6, dans lequel ledit éluat concentré est mélangé audit éluat primaire et/ou secondaire et l'éluat combiné est purifié et séché de façon à fournir un produit non ionique formant milieu de contraste.

8. Procédé selon l'une quelconque des revendications précédentes, dans lequel le solvant est un alcanol inférieur.

9. Procédé selon la revendication 8 dans lequel le solvant est le méthanol.

10. Procédé selon l'une quelconque des revendications précédentes, dans lequel le composé formant milieu de contraste est le composé non ionique, formant milieu de contraste pour rayons X de formule N,N'-bis(2,3-dihydroxypropyl)-5-[N-(2-hydroxyéthyl)glycolamido]-2,4,6-triiodoisophtalamide.
